(19) Europäisches Patentamt

European Patent Office

Office européen des brevets

(11) **EP 1 166 460 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(21) Anmeldenummer: 00934890.5

(22) Anmeldetag: **11.04.2000**

(51) Int Cl.⁷: $H04B\ 7/04$

(86) Internationale Anmeldenummer:
**PCT/DE2000/001119**

(87) Internationale Veröffentlichungsnummer:
**WO 2000/062444 (19.10.2000 Gazette 2000/42)**

(54) **STRAHLFORMUNGSVERFAHREN DER ABWÄRTSSTRECKE FÜR BASISSTATIONEN IN FUNK-KOMMUNIKATIONSSYSTEMEN**

BEAM SHAPING METHOD FOR THE DOWNLINK FOR BASE STATIONS IN RADIO COMMUNICATION SYSTEMS

PROCEDE DE MISE EN FORME DE FAISCEAU POUR LA LIAISON DESCENDANTE A PARTIR DE STATIONS DE BASE DANS DES SYSTEMES DE COMMUNICATION RADIO

(84) Benannte Vertragsstaaten:
**DE FR GB**

(30) Priorität: **14.04.1999 DE 19916912**

(43) Veröffentlichungstag der Anmeldung:
**02.01.2002 Patentblatt 2002/01**

(73) Patentinhaber: **SIEMENS AKTIENGESELLSCHAFT
80333 München (DE)**

(72) Erfinder:
• **JOHAM, Michael
  D-80809 München (DE)**
• **UTSCHICK, Wolfgang
  D-80804 München (DE)**
• **NOSSEK, Josef
  D-82393 Iffeldorf (DE)**

(56) Entgegenhaltungen:
**EP-A- 0 866 568          WO-A-97/00543
WO-A-98/37638          WO-A-99/14870**

**Beschreibung**

Die Erfindung betrifft ein Verfahren und eine Basisstation zur Strahlformung für die Senderichtung, insbesondere in Funk-Kommunikationssystemen mit CDMA-Übertragung.

In Funk-Kommunikationssystemen werden Nachrichten (beispielsweise Sprache, Bildinformation oder andere Daten) als Signale mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

In Kommunikationssystemen, beispielsweise Mobilfunknetzen oder Systemen des drahtlosen Teilnehmeranschlusses sind Verfahren der räumlichen Teilnehmerseparierung beispielsweise aus DE 197 13 666 bekannt. In solchen SDMA (space division multiple access) Systemen können mehrere Kommunikationsverbindungen in einem gemeinsamen Kanal versorgt werden, wobei der Kanal durch ein Frequenzband und evtl. einen Zeitschlitz oder einen Spreizkode in SDMA/TDMA (time division multiple access) oder SDMA/CDMA (code division multiple access) Systemen beschrieben wird. Dazu werden sendeseitig, z.B. in Basisstationen von Mobilfunknetzen, adaptive Antenneneinrichtungen mit mehreren Antennenelementen eingesetzt. Durch diese adaptive Antennen können durch Strahlformung mehrere auf die jeweiligen Position der empfangenden Funkstation, z.B. Mobilstationen von Mobilfunknetzen, abgestimmte Abstrahlungskeulen geformt werden. Durch diese voneinander unabhängigen Abstrahlungskeulen erfolgt die räumliche Auflösung, die zur Separierung von Teilnehmersignalen benutzt wird.

Die Übertragungsstrecke von einer Basisstation zu einer Mobilstation wird als Abwärtsstrecke und die Ubertragungsstrecke von einer Mobilstation zu einer Basisstation wird als Aufwärtsstrecke bezeichnet. Die räumliche Teilnehmerseparierung durch Strahlformung kommt üblicherweise bei der Abwärtsstrecke zum Einsatz.

Die spektrale Effizienz der Abwärtsstrecke wird eine große Rolle für zukünftige Funk-Kommunikationssysteme spielen, da viele Dienste ein asymmetrisches Verkehrsaufkommen zugunsten der Abwärtstrecke haben werden. Übertragungsverfahren mit adaptiven Antennen können die spektrale Effizienz steigern, da z.B. in DS-CDMA (direct sequence CDMA) der Einfluß des Nah-Fern-Effekts reduziert werden kann. Bei bekannten Verfahren zur Strahlformung, siehe C.Brunner, M.Joham, W.Utschick, M.Haardt, J.A.Nossek, "Downlink Beamforming for WCDMA based on Uplink Channel Parameters", Proc. Third European Personal Mobil Communications Conference, 1999, wurde davon ausgegangen, daß das Sendesignal der Basisstation über einen gewissen Zeitraum - einen Zeitschlitz - konstante Eigenschaften hat. Die Optimierung der Strahlformung bezieht sich hierbei auf eine Maximierung des Signal/Rausch-Verhältnisses für eine Verbindung.

Der Erfindung liegt die Aufgabe zugrunde, ein Verfahren und eine Basisstation anzugeben, die Strahlformung auch bei Sendesignalen mit nichtidealen Eigenschaften zu verbessern. Diese Aufgabe wird durch das Verfahren mit den Merkmalen des Anspruchs 1 und die Basisstation mit den Merkmalen des Anspruchs 12 gelöst. Vorteilhafte Weiterbildungen der Erfindung sind den Unteransprüchen zu entnehmen.

Erfindungsgemäß weist eine Funkstation, z.B. eine Basisstation, eine Antenneneinrichtung mit mehreren Antennenelementen auf und ist mit einer weiteren Funkstation, z.B. einer Teilnehmerstation, über eine Funkschnittstelle verbunden. Aus den Aussendungen der weiteren Funkstation werden auf bekannte Weise Einfallsrichtung, Dämpfung und Verzögerungszeiten von Verbindungspfaden bestimmt, die zur Strahlformung für Signalabschnitte zur Kanalschätzung bei der weiteren Funkstation dienen. Während dieser Signalabschnitte zur Kanalschätzung, für die die Funkstation ein Empfangsverhalten der weiteren Funkstation abschätzen kann, ist der Strahlformungsvektor für das Sendesignal konstant.

Außerhalb der Signalabschnitte für die Kanalschätzung wird ein symbolbezogener Strahlformungsvektor, für ein Symbol oder für eine Symbolgruppe, bestimmt, der veränderliche, symbolbezogene Eigenschaften des Sendesignals berücksichtigt. Diese symbolbezogenen Eigenschaften sind beispielsweise Korrelationseigenschaften von Spreizkodes, die nicht während eines Zeitschlitzes konstant sind, sondern sich von Symbol zu Symbol verändern. Die erfindungsgemäße Lösung hat diese bisherige Unzulänglichkeit erkannt und schlägt eine Lösung vor, die den Strahlformungsvektor symbolbezogen anpaßt. Das Verfahren berechnet gleichzeitig auch inherent die Strahlformungsvektoren für mehrere weitere Funkstationen, wenn dafür die Angaben vorliegen.

Weiterhin geht die Erfindung von Kenntnissen über das Empfangsverhalten der weiteren Funkstation während der Kanalschätzung aus. Dafür wird der Strahlformungsvektor konstant gehalten. Würde das Empfangsverhalten nicht abgeschätzt, so ergäbe sich ein unbekannter Freiheitsgrad und das der symbolbezogenen Strahlformungsoptimierung zugrundeliegende Gleichungssystem würde unlösbar sein. Um die Lösung des Gleichungssystem für die Strahlformung zu ermöglichen, antizipiert die Funkstation, welche Gewichte der RAKE-Finger die weitere Funkstation während der Signalabschnitte für die Kanalschätzung eingestellt hat. Durch die Strahlformung sollen die Entscheidungswerte des RAKE-Demodulators der weiteren Funkstation für eine gute Detektierbarkeit optimiert werden.

Das Empfangsverhalten ist durch die bekannten Größen:

Sendeleistung, Strahlformungsvektor und Eigenschaften der Antenneneinrichtung beeinflußt. Eine weitere Einflußgröße sind die individuellen Phasenverzögerungen der Verbindungspfade zwischen den Funkstationen. Die Phaseninformationen werden entweder von der weiteren Funkstation übertragen, so daß sich ein sehr genaues Einstellen ergibt, oder es werden Optimierungsverfahren ohne eine Übertragung der Phaseninformationen eingesetzt, die entweder auf eine Leistungsbetrachtung der Empfangssignale oder eine "Worst-Case"-Betrachtung abzielen. Weitere vorteilhafte Ausbildungen der Erfindung ergeben sich aus den Ausführungsbeispielen.

Die Erfindung wird im folgenden anhand von Ausführungsbeispielen näher erläutert.

Signalmodell:

Es wird von einer Funkschnittstelle mit WCDMA (wideband CDMA) Übertragung ausgegangen; die von der ETSI (European Telecommunications Standardisation Institute) für einen FDD-Modus (frequency division duplex) vorgesehen ist. Ein Sendesignal einer Basisstation in der Abwärtsstrecke zu den weiteren Funkstationen, z.B. Teilnehmerstationen $k \in \{1,..,K\}$ kann angegeben werden als

$$s_k(t) = \sum_{m=0}^{8} s_k^{(m)} c_k^{(m)}(t - mT_k) \qquad (1)$$

$$c_k^{(m)}(t) = \sum_{q=1}^{Q_k} d_k^{(m)}\{q\} p_{rrc}(t - qT_c) \qquad (2)$$

wobei $s_k^{(m)} \in \{-1, +1\}$ die BMSK-modulierten Symbole bezeichnet. Ein Spreizkode $c^{(m)}(t)$ für das m-te Symbole der Teilnehmerstation k setzt sich aus $Q_k$ Chips $d_k^{(m)}[q] \in \{-1, +1\}$ zusammen und hat die Länge $T_k = Q_k T_c$. Die Chiprate wird mit 4096 Mchips/s angenommen. Die Chipform $p_{rrc}(t)$ hat ein "square root raised cosine"-Spektrum mit $\alpha = 0,22$. Die Chips $d_k^{(m)}[q]$ ändern sich von Symbol zu Symbol, da sie durch eine Multiplikation der q-ten Chip eines Kodes mit orthogonalen variablen Spreizfaktor (OVSF) der k-ten Teilnehmerstation und dem $(mQ_k + q)$-ten Chip eines PN (pseudo-noise) Verwürflungskodes (scrambling codes) entstehen.

Datenmodell der Abwärtsstrecke:

Es wird ein Kanal mit mehreren diskreten Verbindungspfaden angenommen, so daß eine Kanalimpulsantwort $h_k^{(k',m)}(t)$ durch

$$h_k^{(k',m)}(t) = \sum_{q=1}^{Q} h_{k,q}^{(k',m)} \delta(t - \tau_{k,q}) \qquad (3)$$

definiert ist, wobei $\delta(t)$ die Dirac-Funktion angibt. Jeder Koeffizient (Tap) $h_{k,q}^{(k',m)} \in C$ der Kanalimpulsantwort ist einem Verbindungspfad q zugeordnet, über den das m-te Symbol des Signals $k^q$ der Basisstation zur Teilnehmerstation k übertragen wird.

Die Kanalparameter, die von der Basisstation in der Aufwärtsstrecke geschätzt werden, werden bezüglich der Einfallsrichtungen DOA (direction of arrival) als reziprok für die Abwärtsstrecke angenommen. $a_{k,q} \in C^{M \times 1}$ ist ein Steuerungsvektor (steering vector) der Antenneneinrichtung der Basisstation, wobei M die Anzahl der Antennenelemente angibt. Die gemittelte Dämpfung der Verbindungspfade wird mit $p_{k,q} \in R$ bezeichnet und die Verzögerungszeit als $\tau_{k,q}$. Die Dämpfungen werden in aufsteigender Ordnung nummeriert, so daß $p_{k,l}$ der Pfad mit der geringsten Dämpfung ist.

Die Reziprozität gilt jedoch nicht für die Phasenverschiebung $\varphi_{k,q}$. Sind die Frequenzen für beide Übertragungsrichtungen gleich, wie beim TDD-Modus (time division duplex), dann wird auch dies vereinfacht. Beim FDD-Modus sind die Frequenzen der Übertragungsrichtungen jedoch unterschiedlich. In einem ersten Ausführungsbeispiel wird vorgeschlagen, diese Phasenverschiebung $\varphi_{k.q}$ von der Teilnehmerstation zur Basisstation zu übertragen. Da die Datenrate in der Aufwärtsstrecke i.d.R. kleiner ist als in der Abwärtsstrecke, sollte dafür Kapazität vorhanden sein.

Die Basisstation kann also den q-ten Tap von $h_k^{(k',m)}(t)$ berechnen:

$$h_{k.q}^{(k'.m)} = p_{k.q}\, a_{k.q}^H\, w_{k'}^{(m)}\, e^{j\varphi k.q}\,, \qquad (4)$$

wobei $w_{k'}^{(m)} \in C^{M \times 1}$ der Strahlformungsvektor der Basisstation für die k-te Teilnehmerstation ist, der geschätzt werden soll.

Die Kanalimpulsantwort ändert sich von Symbol zu Symbol, da eine symbolbezogene Strahlformung angewendet wird. Die Änderung des Strahlformungsvektors w hängt von den sich ändernden Korrelationseigenschaften des scrambling codes ab, wie anschließend erläutert.

Die Teilnehmerstationen benutzen als Empfänger einen RAKE-Demodulator mit "maximum ratio combining". Der RAKE-Demodulator schätzt zuerst die Kanalimpulsantwort $h_k^{(k,m)}(t)$. Nachdem die Taps der Kanalimpulsantwort zur Ausführung der Kombination benutzt wurden, wird das resultierende Signal mit dem individuellen Spreizkode der Teilnehmerstation k korreliert. Ein Entscheidungswert u für das Ausgangssignal des RAKE-Demodulators k für das Symbol m kann angegeben werden durch:

$$u_k^{(m)} = \mathrm{Re}\left\{ \sum_{k'=1}^{K} \sum_{q=1}^{Q} \sum_{f=1}^{Nf} CCF_{k.k'}^{(m)}(\tau_{k.f} - \tau_{k.q}) v_{k.f}\, p_{k.q}\, a_{k.q}^H\, w_{k'}^{(m)}\, s_{k'}^{(m)}\, e^{j\varphi_{k.q}} \right\} \qquad (5)$$

K, Q and $N_f$ sind die Nummern der Teilnehmerstationen, Verbindungspfade und RAKE-Finger. CFF gibt die Kreuzkorrelationsfunktion des Spreizkodes der Teilnehmerstation k und k' für das Symbol m an. Die Kreuzkorrelationsfunktion entspricht der Autokorrelationsfunktion für k = k'. Die Gewichte v der RAKE-Finger werden aus der Kanalimpulsantwort abgeleitet:

$$\vartheta_{k.f} = E\left[(h_{k.f}^{(k,m)})^*\right] = E\left[p_{k.f}(w_{k'}^{(m)})^H a_{k.f} e^{-j\varphi_{k.f}}\right]\,, \qquad (6)$$

wobei ()* die konjugiert komplexe und E einen Erwartungswert angeben.

Voreinstellung der RAKE-Finger Gewichte v:

Da eine symboleweise Neueinstellung der Strahlformung vorgesehen ist, ändert sich auch die Kanalimpulsantwort. Der RAKE-Demodulator der Teilnehmerstation nutzt Pilotsymbole in Signalabschnitten für die Kanalschätzung zu Beginn jedes Zeitschlitzes zum Schätzen der Kanalimpulsantwort $h_k^{(k.m)}(t)$.

Während der Pilotsymbole, bei einem Ausführungsbeispiel mit einer Funkschnittstelle im TDD-Modus entspricht dies der Mittambel, wird die Strahlformung konstant gehalten. Deshalb ändern sich nur die Korrelationseigenschaften des Spreizkodes durch die Verwürfelung, währenddessen die Kanalimpulsantwort gleich bleibt. Die resultierende Kanalschätzung des RAKE-Demodulators ist der Mittelwert der Schätzungen über alle Pilotsymbole. Der RAKE-Demodulator schätzt folglich einen konstanten Kanal mit gemittelten Korrelationseigenschaften. Die gemittelten Korrelationseigenschaften des scrambling codes sind ideal, d.h. die Kreuzkorrelation etwa gleich Null und die Autokorrelation entspricht dem Spreizfaktor für den Zeitmoment Null und ist ansonsten gleich Null. Nur die Verbindungspfade der RAKE-Finger müssen bei der Kanalschätzung berücksichtigt werden.

Der Strahlformungsvektor $w_k^{pilot}$ der Basisstation für die Pilotsymbole wird derart bestimmt, daß die Leistung der Kanalimpulsantwort beim RAKE-Demodulator k maximiert wird, wobei die Sendeleistung $(w_k^{pilot})^H w_k^{pilot} = 1$ für alle Teilnehmerstationen k gleich ist. Somit entsteht das folgende Optimierungsproblem:

$$\max_{w_k^{pilot}}\left\{\sum_{f=1}^{N_f}(w_k^{pilot})^H a_{k,f} p_{k,f}^2 a_{k,f}^H w_k^{pilot}\right\} = \max_{w_k^{pilot}}\left\{(w_k^{pilot})^H A_k A_k^H w_k^{pilot}\right\} NB:(w_k^{pilot})^H w_k^{pilot} = 1 \quad (7)$$

wobei $A_k = [a_{k,1}p_{k,1},...a_{k,Nf}p_{k,Nf}] \in C^{M \times Nf}$ entspricht. Die Lösung ist der Eigenvektor für den größten Eigenwert $A_k A_k^H$.

Das resultierende Gewicht des RAKE-Finger ergibt sich aus:

$$v_{k,f} = p_{k,f}(w_k^{pilot})^H a_{k,f} e^{-j\varphi_{k,f}} \qquad (8)$$

Symbolbezogene Strahlformung:

Nachdem die Gewichte v der RAKE-Finger während der Übertragung der Pilotsymbole bestimmt wurden, kann die Basisstation den Strahlformungsvektor $w^{(m)}$ der Teilnehmerstation k für jedes Symbol m errechnen, der den geforderten Entscheidungswert $u_k^{(m)}$ am Ausgang des RAKE-Demodulators k hervorruft. Zusätzlich wird die Möglichkeit zur Sendeleistungsreduzierung durch den Antennengewinn der Antenneneinrichtung genutzt.

Zur Vereinfachung werden folgende Abkürzungen eingeführt:

$$z_{k'}^{(m)} = s_{k'}^{(m)} w_{k'}^{(m)} \in C^{M \times 1}$$

und

$$b_{k,q} = p_{k,q} a_{k,q} e^{-j\varphi_{k,f}} \in C^{M \times 1}.$$

Der Entscheidungswert des RAKE-Demodulators für die Teilnehmerstation k kann mit

$$u_k^{(m)} = \text{Re}\left\{\sum_{k'=1}^{K}\sum_{q=1}^{Q}\sum_{f=1}^{N_f} CCF_{k,k'}^{(m)}(\tau_{k,f}-\tau_{k,q})v_{k,f}b_{k,q}^H z_{k'}^{(m)}\right\} \qquad (9)$$

angegeben werden.

Nachdem die Vektoren $z^{(m)}$ in einem Vektor $z_{k'}^{(m)}$ gesammelt und in eine reelle Darstellungform transformiert sind, entsteht folgende Darstellung für den Entscheidungswert u des RAKE-Demodulators:

$$u_k^{(m)} = \sum_{q=1}^{Q}\sum_{f=1}^{N_f}(\gamma_{k,f,q}^{(m)})^T x^{(m)} = (\gamma_k^{(m)})^T x^{(m)} \qquad (10)$$

mit

$$x^{(m)} = \left[\text{Re}\left\{z^{(m)}\right\}^T, \text{Im}\left\{z^{(m)}\right\}^T\right] \in R^{2MK \times 1}$$

$$z^{(m)} = \left[(z_1^{(m)})^T,...,(z_K^{(m)})^T\right] \in C^{MK \times 1}$$

und

$$\gamma_k^{(m)} = \sum_{q=1}^{Q} \sum_{f=1}^{N_f} \gamma_{k,f,q}^{(m)} \in R^{2MK \times 1}$$

$$\gamma_{k,f,q}^{(m)} = \left[ \mathrm{Re}\left\{ g_{k,f,q}^{(m)} \right\}^T , \mathrm{Im}\left\{ g_{k,f,q}^{(m)} \right\}^T \right]^T \in R^{2MK \times 1}$$

mit

$$g_{k,f,q}^{(m)} = [CCF_{k,1}^{(m)}(\tau_{k,f} - \tau_{k,q}),...,CCF_{k,K}^{(m)}(\tau_{k,f} - \tau_{k,q})]^T \otimes (v_{k,f}^* b_{k,q}) \in C^{MK \times 1}$$

wobei $\otimes$ das Kronecker-Produkt bezeichnet.

Ziel der Optimierung ist es, für jeden RAKE-Demodulator den Entscheidungswert u auf ein vorgegebenes Niveau zu bringen, somit müssen K Bedingungen erfüllt werden. Die Anzahl der Freiheitsgrade ist größer als die Anzahl der Bedingungen. Die verbleibenden Freiheitsgrade können benutzt werden, um eine Lösung mit reduzierter Sendeleistung der Basisstation zu finden. Das Optimierungsproblem stellt sich wie folgt dar:

$$\min_{x^{(m)}} \left\{ \left\| x^{(m)} \right\|_2^2 \right\} \qquad NB: \Gamma^{(m)} x^{(m)} = \theta \qquad\qquad (11)$$

wobei

$$\Gamma^{(m)} = \left[ s_1^{(m)} \gamma_1^{(m)} , ... , s_K^{(m)} \gamma_K^{(m)} \right]^T \in R^{K \times 2MK}$$

und

$$\theta = [\theta_1, ..., \theta_K]^T \in R_+^{K \times 1} .$$

Der Parameter $\theta_k \in R_+$ der Nebenbedingung von (11) ist der absolute Wert des geforderten Entscheidungswertes u des RAKE-Demodulators k. Das geforderte $\theta_k$ kann individuell für jede Teilnehmerstation k gewählt werden. Schnelle Sendeleistungsregelung mit TPC kann leicht implementiert werden, indem $\theta_k$ abhängig von der TPC-Anweisung verändert wird.

Die Lösung des Optimierungsproblems von Gleichung (11) kann durch

$$x^{(m)} = (\Gamma^{(m)})^T (\Gamma^{(m)}(\Gamma^{(m)})^T)^{-1} \theta \qquad\qquad (12)$$

angegeben werden. Die Berechnung des Strahlformungsvektors w für mehr als ein Symbol ist leicht möglich; nur zusätzliche Nebenbedingungen für die anderen Symbole sind in (11) hinzuzufügen.

Ausführungsbeispiele ohne Phaseninformation in der Basisstation:

Auch die zwei Varianten ohne Feedback mit Phaseninformationen nutzen die oben beschriebene Voreinstellung der RAKE-Finger Gewichte v. Der Einfluß der unbekannten Phasenverschiebung wird durch den Einsatz geeigneter Zielfunktionen ausgeglichen.

Die erste Variante nutzt das Signal-zu-Interferenz-und-Rausch-Verhältnis $SINR_k$ des Ausgangssignals des RAKE-Demodulators. Die zweite Variante geht von der Annahme der ungünstigen Phasenlage für den Entscheidungswert u aus (worst case).

1. Variante: Leistungsbetrachtung

Diese Variante teilt das Signal in ein Nutzsignal $S_k$, die Interferenz durch nichtideale Autokorrelationseigenschaften des Spreizkodes (ISI Intersymbolinterferenzen) und die Interferenz durch nichtideale Kreuzkorrelationseigenschaften des Spreizkodes (CCI co-channel interference) ein.

Die Leistung des Nutzsignals entspricht

$$S_k^{(m)} = \left| \sum_{f=1}^{N_f} CCF_{k,k}^{(m)}(0) y_{k,f} p_{k,f} a_{k,f}^H w_k^{(m)} \right|^2 \tag{13}$$

wobei $y_{k,f} = v_{k,f} e^{-j\varphi k,f}$ das Gewicht des RAKE-Fingers v ohne den Faktor mit der Phase des Verbindungspfades ist.

Für die Leistung der Interferenz des Ausgangssignals des RAKE-Demodulators ist angenommen, daß die Anteile inkoharent addiert werden. Daher:

$$I_k^{aw,(m)} = \sum_{f=1}^{N_f} \sum_{q=1}^{Q} \left| CCF_{k,k}^{(m)}(\tau_{k,f} - \tau_{k,q}) y_{k,f} p_{k,q} a_{k,q}^H w_k^{(m)} \right|^2 \tag{14}$$

und CCI als

$$I_k^{cr,(m)} = \sum_{k'=1,k'\neq k}^{K} \sum_{f=1}^{N_f} \sum_{q=1,q\neq f}^{Q} \left| CCF_{k,k'}^{(m)}(\tau_{k,f} - \tau_{k,q}) y_{k,f} p_{k,q} a_{k,q}^H w_{k'}^{(m)} \right|^2 \; . \tag{15}$$

Somit ergibt sich ein Optimierungsproblem nach:

$$\min_{w_k^{(m)} \atop k=1..K} \left\{ \sum_{k=1}^{K} \left\| w_k^{(m)} \right\|_2^2 \right\} \quad , \tag{16}$$

mit NB:

$$S_k^{(m)} = SINR_k(I_k^{aw,(m)} + I_k^{cr,(m)} + N_k), k = 1,...,K$$

mit Nk als Leistung von Rauschen und Interzellinterferenz.

2. Variante: Worst-Case-Betrachtung

Beim ungünstigsten Fall ist der Absolutwert des Entscheidungswertes u

$$u_k^{(m)} = \sum_{f=1}^{N_f} \text{Re}\left\{ CCF_{k,k}^{(m)}(0) v_{k,f} p_{k,f} a_{k,f}^H w_k^{(m)} - \sum_{q=1 \atop q\neq f}^{Q} \left| \sum_{k'=1}^{K} CCF_{k,k'}^{(m)}(\tau_{k,f} - \tau_{k,q}) v_{k,f} p_{k,q} a_{k,q}^H w_{k'}^{(m)} s_{k'}^{(m)} \right| \right\}$$

$$\tag{17}$$

woraus sich ein Optimierungsproblem entsprechend:

$$\min_{w_k^{(m)}} \left\{ \sum_{k=1}^{K} \left\| w_k^{(m)} \right\|_2^2 \right\} \qquad NB : u_k^{(m)} = \theta_k, \qquad k = 1, \ldots, K \qquad (18)$$

für $\theta = [\theta_1, \ldots, \theta_K]^T \in R_+^{K \times 1}$ siehe Gleichung (11).

ergibt.

Die Bitfehlerrate einer Übertragung mit Strahlformung nach dem erfindungsgemäßen Verfahren mit Feedback der Phaseninformation führt zu einer Bitfehlerrate, die um fast zwei Zehnerpotenzen besser ist als bei herkömmlichen Verfahren.

Der hergeleitete Strahlformungsalgorithmus mit symbolweiser Strahlformung durch eine adaptive Antenneneinrichtung für die Abwärtsverbindung zu den einzelnen Teilnehmerstationen wird in Basisstationen BS des Funk-Kommunikationssystem verwirklicht. Der anschliessend beschriebene Ablauf des Verfahrens bezieht sich auf die Übertragung der Daten von der Basisstation BS zur Teilnehmerstation MS nachdem bereits der Verbindungsaufbau abgeschlossen wurde.

1. Parameterschätzung der Einfallsrichtungen, Dämpfungen und Verzögerungszeiten der Verbindungspfade von den verschiedenen Teilnehmerstationen, welche der Basisstation zugeordnet sind, in der Aufwärtsverbindung. Diese geschätzten Parameter stellen die Grundlage für die folgenden Schritte der Strahlformung in der Abwärtsstrecke für die Dauer eines Zeitschlitzes dar.

2. Die Basisstation BS empfängt die von der Teilnehmerstation MS gesendete Phaseninformation, welche auf der Grundlage der Kanalschätzung des unmittelbar vorangegangenen Zeitschlitzes durch den RAKE-Demodulator der Teilnehmerstation MS berechnet wurde. Die Bestimmung der Phaseninformation stellt keinen Mehraufwand dar, weil bereits der konventionelle RAKE-Demodulator eine Kanalschätzung vorsieht. Die Teilnehmerstation muß nicht verändert werden.

3. Voreinstellung der RAKE-Finger Gewichte v während der Pilotsymbole eines jeden Zeitschlitzes:

a) Strahlformungsvektoren $w_k^{pilot}$ werden mittels der angegebenen Optimierung in Gleichung (7) berechnet.
b) Konstante Strahlformung während der Pilotsymbole auf der Grundlage des berechneten Strahlformungs-vektors $w_k^{pilot}$ .

4. Daraus folgt die Vorbestimmung der RAKE-Finger Gewichte v durch Gleichung (8). Die unbekannten Phasen-verschiebungen $\varphi_{k,f}$ werden durch die bereits empfangenen Phaseninformationen der Teilnehmerstation MS (siehe Punkt 2) ersetzt.

5. Zusammenfassen der bekannten Kanalparameter pro Teilnehmerstation MS und Verbindungspfad im Vektor b.

6. Symbolweise Berechnung der Strahlformungsvektoren w für alle Teilnehmerstationen MS mittels folgender Schritte:

a) Berechnung der Auto- und Kreuzkorrelationen der verwürfelten Spreizcodes in Abhängigkeit der aus der Aufwärtsstrecke bekannten Pfadverzögerungszeiten.
b) Zusammenfassen der Strahlformungsvektoren w mit den jeweils zu übertragenden Datensymbolen im Vektor z.
c) Reellwertige Darstellung der RAKE-Demodulator-Ausgangsgrössen in Gleichung (10) in Abhängigkeit der berechneten Auto- und Kreuzkorrelationen, sowie den zusammengefassten Kanalparametern und Strahlformungsvektoren b und z.
d) Definition der geforderten RAKE-Demodulator-Ausgangswerte im Vektor $\theta_k$. Die Wahl der Einträge $\theta_k$ erfolgt in Abstimmung mit den zu erwartenden Störungen durch Rauschen und Interzellinterferenz. Eine Implementierung des TPC (Transmission Power Control) kann für eine adaptive Einstellung der Einträge übernommen werden.
e) Berechnung der zusammengefassten Strahlformungsvektoren mittels Gleichung (12).

Alternative symbolweise Berechnung der Strahlformungsvektoren w für die Teilnehmerstationen ohne Kenntnis der Phaseninformationen (kein Feedback, Schritt 2, 5 und 6 entfallen). Zwei mögliche Alternativen:

a) Leistungsbetrachtung:

Aufstellen der Signalnutzleistung am RAKE-Demodulator-Ausgang, der Leistung der Intersymbolinterferenz und der Kanalübersprechleistung in Gleichung (13)-(15). Berechnung der Strahlformungvektoren in Gleichung (16).

b) "Worst-Case"-Betrachtung:

Aufstellen der RAKE-Demodulator-Ausgangsgrössen in Gleichung (17) für den Worst-Case der unbekannten Phaseninformation. Berechnung der Strahlformungvektoren in Gleichung (18).

Die Berechnung der Strahlformungsvektoren verfolgt in einer digitalen Signalverarbeitungseinrichtung der Basisstation BS. Die Signalverarbeitung wertet dazu Meßwerte der Antennenelemente der Antenneneinrichtung AE bezüglich von Empfangssignalen aus. Nach einer Verstärkung, Basisbandübertragung und Analog/Digital-Wandlung stehen der digitalen Signalverarbeitungseinrichtung digitalisierte Eingangswerte der Empfangssignale zur Verfügung. Diese Eingangswerte und weitere verbindungsindividuelle Parameter (Sendeleistung, TPC), sowie Programme zur Durchführung der Algorithmen sind in Speichermitteln gespeichert.

Die Strahlformung auf Basis der Strahlformungsvektoren v für die Sendesignale wird in einer Basisstation BS mit einem Netzwerk zur Strahlformung beispielsweise nach DE 197 37 365 ausgeführt. Die Sendesignale der Antennenelemente werden im gleichen Frequenzband (gleiche Sendefrequenz, ggf. Zeitschlitz und/oder Code) übertragen und ergeben gemeinsam eine räumliche Separierung.

**Patentansprüche**

1. Verfahren zur Strahlformung in einer Funkstation eines Funk-Kommunikationssystems, bei dem

   - die Funkstation eine Antenneneinrichtung mit mehreren Antennenelementen aufweist, die Funkstation
   - mit einer weiteren Funkstation über eine Funkschnittstelle verbunden ist und aus den Aussendungen der weiteren Funkstation Übertragungsgrößen für zumindest einen Verbindungspfad bestimmt,
   - an die weitere Funkstation ein Signal überträgt, das Signalabschnitte enthält, die von der weiteren Funkstation zur Kanalschätzung benutzt werden,
   - während der Signalabschnitte für die Kanalschätzung einen konstanten Strahlformungsvektor aus den Übertragungsgrößen für zumindest einen Übertragungspfad einstellt,
   - bezüglich der Signalabschnitte für die Kanalschätzung ein Empfangsverhalten der weiteren Funkstation abschätzt,
   - außerhalb der Signalabschnitte für die Kanalschätzung einen symbolbezogenen Strahlformungsvektor bestimmt, der veränderliche, symbolbezoge Eigenschaften des Sendesignals berücksichtigt.

2. Verfahren nach Anspruch 1, bei dem die Funkschnittstelle nach einem CDMA-Übertragungsverfahren ausgebildet ist.

3. Verfahren nach einem der vorherigen Ansprüche, bei dem die Signalabschnitte für die Kanalschätzung der weiteren Funkstation bekannte Pilotsymbole sind.

4. Verfahren nach einem der vorherigen Ansprüche, bei dem die weitere Funkstation als Teilnehmerstation mit RAKE-Demodulator ausgebildet ist und das Empfangsverhalten als Gewichte von RAKE-Fingern geschätzt werden.

5. Verfahren nach einem der vorherigen Ansprüche, bei dem die veränderlichen, symbolbezogen Eigenschaften des Sendesignals Auto- und/oder Kreuzkorrelationseigenschaften von für das Sendesignal benutzen Spreizkodes sind.

6. Verfahren nach einem der vorherigen Ansprüche, bei dem die Übertragungsgrößen für zumindest einen Verbindungspfad Einfallsrichtung, Dämpfung und Verzögerungszeiten sind.

7. Verfahren nach einem der vorherigen Ansprüche, bei dem der Strahlformungsvektor derart optimiert wird, daß bei der weiteren Funkstation ein vorgegebener Entscheidungswert eines Detektionsergebnisse auftritt und eine geringe Sendeleistung benötigt wird.

8. Verfahren nach einem der vorherigen Ansprüche, bei dem pro Symbol oder pro Symbolgruppe der Strahlformungsvektor erneut bestimmt wird.

9. Verfahren nach einem der vorherigen Ansprüche, bei dem die weitere Funkstation der Funkstation Phaseninformationen bezüglich der einzelnen Verbindungspfade überträgt,
die Funkstation die Phaseninformationen bei der Abschätzung des Empfangsverhaltens der weiteren Funkstation berücksichtigt.

10. Verfahren nach einem der Ansprüche 1 bis 8, bei dem von der Funkstation eine Signalnutz-, eine Intersymbolinterferenz- und eine Kanalübersprechleistung bei der wieteren Funkstation abgeschätzt werden und der Strahlformungsvektor auf eine minimal benötigte Sendeleistung. optimiert wird.

11. Verfahren nach einem der Ansprüche 1 bis 8, bei dem ein Entscheidungswert eines Detektionsergebnisse in der weiteren Funkstation bei ungünstigsten Phasenverhältnissen abgeschätzt wird,
der Entscheidungswert auf eine vergebene Schwelle festgelegt wird, und
der Strahlformungsvektor auf eine minimal benötigte Sendeleistung optimiert wird.

12. Basisstation mit Mitteln zur Durchführung der Schritte des Verfahrens nach Anspruch 1, **dadurch gekennzeichnet, dass** sie

- mit einer Funkstation über eine Funkschnittstelle verbunden ist, und
- eine Antenneneinrichtung mit mehreren Antennenelementen,
- eine digitale Signalverarbeitungseinrichtung zur Bestimmung von Übertragungsgrößen aus den Aussendungen der Funkstation und zur Berechnung von Strahlformungsvektoren, sowie
- Speichermittel aufweist.


## Claims

1. Method for forming beams in a radio station of a radio communications system, in which

- the radio station has an antenna device with a plurality of antenna elements,

the radio station

- is connected to another radio station via a radio interface and determines, from the transmissions of the other radio station, transmission variables for at least one connection path,
- transmits a signal which contains signal sections which are used by the other radio station for channel estimation to the other radio station,
- sets, during the signal sections for the channel estimation, a constant beam-forming vector from the transmission variables for at least one transmission path,
- estimates a reception characteristic of the other radio station for the signal sections for channel estimation,
- determines a symbol-related beam-forming vector outside the signal sections for channel estimation, which beam-forming vector takes into account variable, symbol-related properties of the transmit signal.

2. Method according to Claim 1, in which the radio interface is embodied in accordance with a CDMA transmission method.

3. Method according to one of the preceding Claims, in which the signal sections for channel estimation of the other radio station are known pilot symbols.

4. Method according to one of the preceding Claims, in which the other radio station is embodied as a subscriber station with RAKE demodulator, and the reception characteristic is estimated as weightings of RAKE fingers.

5. Method according to one of the preceding Claims, in which the variable, system-related properties of the transmit signals are auto-correlation and/or cross-correlation properties of spread codes used for the transmit signal.

**6.** Method according to one of the preceding Claims, in which the transmission variables for at least one connection path are the direction of incidence, the attenuation and the delay times.

**7.** Method according to one of the preceding Claims, in which the beam-forming vector is optimized in such a way that a predefined decision value of a detection result occurs at the other radio station and a low transmit power is required.

**8.** Method according to one of the preceding Claims, in which the beam-forming vector is determined again per symbol or per symbol group.

**9.** Method according to one of the preceding Claims, in which the other radio station transmits to the radio station phase information relating to the individual connection paths,
the radio station takes into account the phase information in the estimation of the reception characteristic (v) of the other radio station.

**10.** Method according to one of Claims 1 to 8, in which the radio station estimates a signal power, an intersymbol interference power and a channel crosstalk power for the other radio station, and the beam-forming vector is optimized to a minimum required transmit power.

**11.** Method according to one of Claims 1 to 8, in which a decision value of a detection result in the other radio station is estimated under unfavourable phase conditions,
the decision value is fixed at a predefined threshold, and
the beam-forming vector is optimized to a minimum required to transmit power.

**12.** Base station for carrying out the method according to Claim 1, **characterized in that** it

- is connected to a radio station via a radio interface, and
- has an antenna device with a plurality of antenna elements,
- a digital signal-processing device for determining transmission variables from the transmissions of the radio station and for calculating beam-forming vectors as well as
- storage means.


**Revendications**

**1.** Procédé de mise en forme de faisceau dans une station radio d'un système de radiocommunication, dans lequel

- la station radio présente un dispositif d'antenne avec plusieurs éléments d'antenne,

la station radio

- est reliée à une autre station radio via une interface radio et détermine à partir des émissions de l'autre station radio des grandeurs de transmission pour au moins une voie de liaison,
- transmet à l'autre station radio un signal contenant des tronçons de signal qui sont utilisés par l'autre station radio pour l'estimation de canal,
- règle pendant les tronçons de signal pour l'estimation de canal un vecteur constant de mise en forme de faisceau à partir des grandeurs de transmission pour au moins une voie de transmission,
- estime par rapport aux tronçons de signal pour l'estimation de canal un comportement de réception de l'autre station radio,
- détermine en dehors des tronçons de signal pour l'estimation de canal un vecteur de mise en forme de faisceau se référant à des symboles, qui tient compte de propriétés variables, se référant à des symboles, du signal d'émission.

**2.** Procédé selon la revendication 1, dans lequel
l'interface radio est réalisée selon un procédé de transmission CDMA.

**3.** Procédé selon l'une des revendications précédentes, dans lequel
les tronçons de signal pour l'estimation de canal de l'autre station radio sont des symboles pilotes connus.

**4.** Procédé selon l'une des revendications précédentes, dans lequel
l'autre station radio est réalisée comme station d'abonné comprenant un démodulateur RAKE, le comportement de réception étant estimé comme poids de doigts RAKE.

**5.** Procédé selon l'une des revendications précédentes, dans lequel
les propriétés variables, se référant à des symboles, du signal d'émission sont des propriétés d'auto-corrélation et/ou de corrélation croisée de codes d'étalement utilisés pour le signal d'émission.

**6.** Procédé selon l'une des revendications précédentes, dans lequel
les grandeurs de transmission pour au moins une voie de liaison sont la direction d'incidence, l'affaiblissement et des temps de retard.

**7.** Procédé selon l'une des revendications précédentes, dans lequel
le vecteur de mise en forme de faisceau est optimisé de manière à ce qu'une valeur de décision prédéterminée d'un résultat de détection apparaisse dans l'autre station radio et une faible puissance d'émission soit nécessaire.

**8.** Procédé selon l'une des revendications précédentes, dans lequel
le vecteur de mise en forme de faisceau est redéfini, par symbole ou par groupe de symboles.

**9.** Procédé selon l'une des revendications précédentes, dans lequel
l'autre station radio transmet à la station radio des informations de phase concernant les différentes voies de liaison, la station radio tient compte des informations de phase dans l'estimation du comportement de réception de l'autre station radio.

**10.** Procédé selon l'une des revendications 1 à 8, dans lequel
la station radio estime une puissance utile du signal, une puissance d'interférence intersymboles et une puissance de diaphonie du canal dans l'autre station radio, le vecteur de mise en forme de faisceau étant optimisé à une puissance d'émission minimale nécessaire.

**11.** Procédé selon l'une des revendications 1 à 8, dans lequel
une valeur de décision d'un résultat de détection est estimée dans l'autre station radio en cas de conditions de phase les plus défavorables,
la valeur de décision est fixée à un seuil prédéterminé, et
le vecteur de mise en forme de faisceau est optimisé à une puissance d'émission minimale nécessaire.

**12.** Station de base dotée de moyens permettant la mise en oeuvre des étapes du procédé selon la revendication 1, **caractérisé en ce que**

- elle est reliée à une station radio via une interface radio et présente
- un dispositif d'antenne avec plusieurs éléments d'antenne,
- un dispositif numérique de traitement de signal pour déterminer des grandeurs de transmission à partir des émissions de la station radio et pour calculer des vecteurs de mise en forme de faisceau, et
- des moyens de mémoire.